# EUROPEAN PATENT APPLICATION

(11) **EP 1 293 546 A2**
(43) Date of publication of application: **19.03.2003**
(21) Application number: 02020806.2
(22) Date of filing: 17.09.2002
(51) Int. Cl.: C09D 11/00

(54) **Ink jet inks**

(30) Priority: 17.09.2001 US 954467
(71) Applicant: WESTVACO CORPORATION, Stamford, Connecticut 06905 (US)
(72) Inventor: Alford, John, Goose Creek, South Carolina 29445 (US)
(74) Representative: Hepworth, John Malcolm

(57) **Abstract**

The present invention relates to aqueous, pigment-based ink compositions for use in ink jet printers. These compositions comprise a carrier medium, an insoluble pigment, and a polymer produced by reacting a mixture of styrene, acrylic acid, and butyl acrylate in a polymerization reaction. The ink compositions are characterized by their water resistance and accent marker resistance properties, while also achieving excellent print quality, jetting properties, storage stability, reliability, and dying times.

## Description

The present invention relates to aqueous, pigment-based ink compositions for use in ink jet printers. These compositions comprise a carrier medium, an insoluble pigment, and a polymer produced by reacting a mixture of styrene, acrylic acid, and butyl acrylate in a polymerization reaction. The ink compositions are characterized by their water resistance and accent marker resistance properties, while also achieving excellent print quality, jetting properties, storage stability, reliability, and dying times.

Prints made from commercial aqueous, pigmented-based, ink jet inks exhibit poor resistance to both water and accent markers, and are also lower in optical density than prints made from laser printers. Those skilled in the art seek to eliminate these deficiencies. A suitable ink jet ink additive has been sought which would allow the ink jet printer producers to achieve optical densities now achieved only by laser printer producers, while imparting excellent resistance to both water and accent markers.

Ink jet printing involves placement, in response to a digital signal, of small drops of fluid ink onto a surface to form an image without physical contact between the printing device and the surface. In drop-on-demand ink jet printing systems, liquid ink droplets are propelled from a nozzle by heat (thermal or bubble ink jet) or by a pressure wave (piezo ink jet). Thermal or bubble ink jet inks typically are based on water and glycols. Piezo ink jet systems generally use aqueous, solvent, or solid inks. These last inks, also known as phase change inks, are solid at ambient temperature and are liquid at printing temperatures.
The following properties are required of an ink composition for ink jet printing:
(a) high quality printing (edge acuity and optical density) of text and graphics on substrates, in particular, on uncoated cellulosic paper;
(b) short dry time of the ink on a substrate such that the resulting printed image is not smudged when rubbed or offset onto a subsequent printed image placed upon the print;
(c) good jetting properties exhibited by a lack of deviation of ink droplets from the flight path (misplaced dots) and of ink starvation during conditions of high ink demand (missing dots);
(d) resistance of the ink after drying on a substrate to water and to accent markers;
(e) long-term storage stability (no crust formation or pigment settling); and
(f) long-term reliability (no corrosion, nozzle clogging, or kogation).

Inks are known which possess one or more of the above listed properties. However, few inks are known which possess all of the above listed properties. Often, the inclusion of an ink component meant to satisfy one of the above requirements prevents another requirement from being met. For example, the inclusion of a polymer in the ink composition can improve the water resistance and the accent marker resistance of the ink on a substrate after drying. However, the polymer can also cause flocculation or settling of the pigments and impair jetting properties and long-term storage stability. Thus, most commercial ink jet inks represent a compromise in an attempt to achieve at least an adequate response in meeting all of the above listed requirements.

Attempts made to meet the coating criteria listed above are disclosed in U.S. Patent Nos.: 5,565,022; 4,384,096; 4,138,381; 3,894,980; 3,891,591; and 3,657,175 (which are hereby incorporated by reference). The coatings of these patent disclosures, however, do not teach accomplishment of resistance to water and to accent markers with increased optical density while continuing to achieve other desirable ink jet ink properties.

Accordingly, an object of the present invention is to provide improved pigment-based ink compositions capable of satisfying simultaneously the properties required of an ink composition for ink jet printing, especially the aforementioned properties (a) to (f).

Another object of the instant invention is directed to preparation of a polymer that provides an ink composition for ink jet printing with reduced water sensitivity.

A further object of the instant invention is directed to preparation of a polymer that provides an ink composition for ink jet printing with reduced accent market sensitivity.

Still another advantageous feature of the invention that is the subject matter of this application is to provide an ink that has excellent filterability such that the ink can be filtered during manufacturing without ruining the filters. Other objects and advantages of the present invention will become apparent from the following disclosure.

The objects of the invention can be met via the formulation of ink jet inks comprising a carrier medium, an insoluble pigment, and a polymer produced by reacting a mixture of styrene, acrylic acid, and butyl acrylate in a polymerization reaction. Ink jet ink formulations containing these polymers exhibit enhanced water resistance and accent marker resistance without reducing the optical density and acuity of the print.

The improved ink jet ink compositions of the present invention comprise:
(a) from about 60% to about 98% by total weight of a water-based carrier medium, wherein said medium comprises:
   (1) up to about 30% by total weight of the medium of water-soluble organic component which is a member selected from the group consisting of alcohols, amides, carboxylic acids, esters, ethers, glycerine, glycols, glycol esters, glycol ethers, ketones, lactams, lactones, sulfones, organosulfoxides, and combinations thereof, and
   (2) the balance of the medium being water;
(b) from about 1% to about 20% by total weight of at least one pigment; and
(c) wherein the improvement comprises the addition of from about 0.1% to about 20% by total weight of polymer produced by reacting in a polymerization reaction a mixture comprising:
   (1) from about 30% to about 60% by weight of the mixture of styrene,
   (2) from about 20% to about 50% by weight of the mixture of acrylic acid,
   (3) from about 5% to about 20% by weight of the mixture of butyl acrylate, and
   (4) a catalytic amount of at least one polymerization initiator.

Components other than those listed above may be included in the ink compositions to achieve specific printer, substrate, or end use requirements.

The ink compositions employed in the practice of the invention include a carrier medium comprised of water or a mixture of water and at least one water-soluble organic component. It is intended, however, that the teaching of this invention may be applicable to other carrier media as well. The carrier medium is present from about 60 to 98% by weight, preferably from about 70 to 95%, based on the total weight of the ink.

Water-soluble organic components which are suitable for use in the present invention include: alcohols, amides, carboxylic acids; esters, ethers, glycerine, glycols, glycol esters, glycol ethers, ketones, lactams, lactones, sulfones, organosulfoxides, and combinations thereof. Preferred water-soluble organic components include alcohols and glycols.

Alcohols that are preferred for use in the present invention include methyl alcohol, ethyl alcohol, n-propyl alcohol, isopropyl alcohol, n-butyl alcohol, sec-butyl alcohol, tertbutyl alcohol, and combinations thereof.

Where desired, the ink compositions may contain at least one glycol that serves as a humectant to prevent drying of the compositions during the printing operation, as well as during storage of the compositions. Glycols that are preferred for use in the present invention include ethylene glycol, diethylene glycol, triethylene glycol, tetraethylene glycol, propylene glycol, dipropylene glycol, glycerine, polyethylene glycol, and combinations thereof. It is further preferred to use polyethylene glycol in the ink composition.

Amides that are preferred for use in the present invention include dimethylformamide, dimethylacetamide, and combinations thereof.

Esters that are preferred for use in the present invention include ethyl acetate, ethyl lactate, ethylene carbonate, and combinations thereof.

Ethers that are preferred for use in the present invention include tetrahydrofuran, dioxin, or combinations thereof.

Ketones that are preferred for use in the present invention include acetone, diacetone, methyl ethyl ketone, and combinations thereof.

Lactams that are preferred for use in the present invention include N-isopropyl caprolactam, N-ethyl valerolactam, and combinations thereof.

Lactones that are preferred for use in the present invention include butyrolactone and the like.

Sulfones that are preferred for use in the present invention include dimethylsulfone and the like.

Organosulfoxides that are preferred for use in the present invention include dimethyl sulfoxide, tetramethylene sulfoxide, and combinations thereof.

The carrier media combinations used in the ink compositions must be compatible with the pigments so that flocculation or settling does not occur as a result of incompatibility. Also, the media combinations should be compatible with the materials of construction of the print head. It is well within the ability of a skilled artisan to formulate compatible carrier mediums using the teachings contained herein.

As used herein the term "pigment" refers to a water-insoluble colorant. Any pigment which is compatible with ink jet ink printing may be employed, either alone or in combination, in the practice of the invention. Pigments used in ink jet inks typically are in a dispersed state and are kept from agglomerating and settling out of the carrier medium by placing acidic or basic functional groups on the surface of the pigments, attaching a polymer onto the surface of the pigments, or adding a surfactant to the ink.

The amount of the pigment present in the ink compositions ranges from about 1% to about 20% by total weight of the compositions, preferably from about 2% to about 5% by weight. Examples of specific pigments that may be used in the practice of the present invention to produce a yellow ink include C.I. Pigment Yellow 1, C.I. Pigment Yellow 3, C.I. Pigment Yellow 13, C.I. Pigment Yellow 74, Pigment Yellow 128, and the like. Examples of specific pigments that may be used in the present invention to produce a magenta ink include C.I. Pigment Red 5, C.I. Pigment Red 7, C.I. Pigment Red 12, C.I. Pigment Red 112, C.I. Pigment Red 122, Pigment Red 202, and the like. Examples of specific pigments that may be used in the present invention to produce a cyan ink include C.I. Pigment Blue 1, C.I. Pigment Blue 2, C.I. Pigment Blue 15:3, C.I. Pigment Blue 16, C.I. Vat Blue 4, C.I. Vat Blue 6, and the like.

Carbon black also may be used as a pigment. Examples of specific blacks which are suitable for use in the present invention include ACRYJET® Black-357 (from Polytribo Company), BONJET® CW-1 (from Orient Chemical Corporation), DISPERS® Jet Black 1 (from BASF Corporation), NOVOFIL® Black BB 03 (from Hoechst Celanese Corporation), Printex 300 (from DeGussa Corporation), Monarch 1000, Cab-O-Jet 300 (from Cabot Corporation), and the like.

Pigment particles suitable for use in the present invention need to be small enough in size so that they can pass cleanly through the desired printing device. As the ejecting nozzles of ink jet ink printers normally range in diameter from about 10 to 100 microns, it is preferred that pigments employed in the present invention have a particle size ranging from about 0.01 microns to about 100 microns, more preferably from about 0.01 microns to about 10 microns, and most preferably from about 0.01 microns to about 5 microns.

Polymers which are suitable for use in the present invention are prepared by reacting, in a polymerization reaction, a mixture containing from about 30% to about 60% by weight of styrene, from about 20% to about 50% by weight acrylic acid, from about 5% to about 20% by weight of butyl acrylate, and a catalytic amount of at least one polymerization initiator. It is preferred that the mixture contain from about 40% to about 55% by weight of styrene, from about 30% to about 45% by weight acrylic acid, from about 8% to about 15% by weight of butyl acrylate, and a catalytic amount of at least one polymerization initiator. It is most preferred that the mixture contain about 49 to about 51% by weight of styrene, about 39 to about 41% by weight acrylic acid, about 9 to about 11% by weight of butyl acrylate, and a catalytic amount of at least one polymerization initiator.

Polymerization methods that are suitable for use in the present invention include solution polymerization, emulsion polymerization, suspension polymerization, and bulk polymerization. The types and catalytic amounts of initiators suitable for use in these types of polymerization reactions are well-known to skilled artisans. The type of polymerization initiator actually employed is known in the art to depend upon the desired temperature for the reaction. The amount of initiator employed in the present invention commonly comprises from about 0.5% to about 5.0% (preferably from about 0.5% to about 1.5%) by weight of the total mixture used to produce the polymer. Traditional emulsion polymerization initiators (such as thermal initiators, redox initiators, and combinations thereof) are suitable for use in the polymerization reaction. Thermal initiators which are suitable for use include, but are not limited to, the following: hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, ammonium persulfate, sodium persulfate, potassium persulfate, isopropyl peroxycarbonate, and combinations thereof. Suitable redox initiators include, but are not limited to, the following: sodium persulfate-sodium formaldehyde sulfoxylate, cumene hydroperoxide-sodium metabisulfite, potassium persulfate-sodium metabisulfite, potassium persulfate-sodium bisulfite, cumene hydroperoxide-iron (II) sulfate, and combinations thereof.

Polymers which are preferred for use in the present invention have an acid number in the range of about 200 to about 300, a weight average molecular weight in the range of from about 1,000 to about 20,000, a softening point in the range of from about 100°C to about 150°C, and a glass transition temperature of less than about 150°C. More preferred polymers are those having an acid number in the range of from about 200 to about 230, a weight average molecular weight in the range of from about 3,000 to about 18,000, a softening point in the range of from about 115°C to about 125°C, and a glass transition temperature of less than about 90°C.

While any suitable amount of the polymer can be used to formulate the ink jet ink compositions, the polymer is preferably used in an amount ranging from about 0.1% to about 20% by total weight of the ink jet ink composition. It is more preferable to use an amount in the range of from about 1% to about 10%, and most preferable to use from about 2% to about 5%.

The ink jet ink of the present invention is preferably adjusted to an alkaline pH so that the solubility of the polymer and the long-term stability of the ink can be improved, with the preferred pH value of the ink is being within the range of about 7 to about 10. Any suitable pH adjuster may be utilized. Examples of suitable pH adjusters include organic amines (such as monoethanolamine, diethanolamine, triethanolamine, aminomethyl propanol, ammonia, and the like) and inorganic alkali agents (such as sodium hydroxide, lithium hydroxide, potassium hydroxide and the like).

One unique aspect of the present invention is that the ink jet ink composition can be formulated without the addition of a surfactant but yet possess the positive properties of a polymer that contains a non-bound surfactant. More importantly, the negative attributes of having a non-bound surfactant in the ink formulation, in particular those problems resulting from a Maragoni effect or substrate penetration, can be avoided.

Consistent with the requirements of this invention, and as appreciated by those skilled in the art, other agents may be incorporated in the ink composition where desired, including: agents to prevent intercolor bleed, anticurl and anticockle agents, antiseptic agents, biocides, chelating agents, corrosion inhibitors, desizing agents, mildewproofing agents, penetration promoters, pH adjusters and maintainers, pigment dispersants, resins, surface tension modifiers, surfactants, and viscosity modifiers.

The ink compositions of the present invention are particularly suited for use in ink jet printers in general and drop-on-demand (DOD) ink jet printers in particular. Inks compositions of the present invention suitable for use in DOD ink jet printers should have a surface tension in the range of from about 20 to about 70 dyne/cm, with the more preferred range being from about 35 to about 50 dyne/cm. The viscosity of the inks should be no greater than about 15 cP at 25°C, and preferably below 5 cP. The inks should be stable to long term storage and to changes in temperature and relative humidity. In addition, they should dry quickly on the substrate but should not bleed through the substrate. No limitation is placed on the order in which the components of the ink compositions are combined or the method in which they are combined.

A particularly desirable feature of the ink jet ink composition of the present invention is that there is no limitation placed on the recording medium used in conjunction with the above printing methods. Any suitable substrate can be employed, including conventional cellulosic papers such as copying paper and bond paper, silica coated papers, glass, aluminum, rubber, vinyl, fabrics, textile products, plastics, polymeric films, inorganic substrates such as metals and woods, and the like. In a preferred embodiment, the recording medium is a porous or absorbent substrate, such as uncoated paper.

The following examples are provided to further illustrate embodiments of the present invention and are not to be construed as limiting the invention, as claimed, in any manner.

### EXAMPLE 1

Preparation of a polymer suitable for use in the present invention was conducted in a lab-scale continuous stirred-tank reactor (CSTR), a 1-liter, agitated Parr vessel, which is kept under nitrogen pressure. The monomers, solvent, chain transfer agent, and initiator were pumped continuously into the reactor through a dip leg, which extended to near the bottom of the vessel. The reaction mixture of polymer, solvent, unreacted monomers, and decomposition products was removed through the lid of the Parr and passed through a back-pressure regulator into a heated solvent flash vessel from which the deveolatilized resin was pumped into a collection container. Vapors were drawn off the top of the flash vessel, condensed, and collected.

The weight ratio of monomers in the feed was 50.5:40.4:9.2 styrene:acrylic acid:butyl acrylate. Based on weight of monomers, the feed contained 1.8% di-tert-butyl peroxide as an initiator. The reaction solvent was ethyl 3-ethoxypropionate at 18% by weight of the total feed (26.2% by weight of monomers). Feed rate was 8.0 g/min, which gave a residence time in the CSTR of about 111 minutes. Process temperature in the CSTR was 157 to 160°C. Process temperature in the solvent flash vessel (SFV) during the steady-state part of the run ranged from 180 to 193°C. Pressure in the SFV was atmospheric and the resin pump discharged the resin continuously.

The resulting polymer (Polymer No. 1) had a molecular weight of 13,000 daltons, a glass transition temperature of 80°C, an acid number of 230, and a ring and ball softening point of 124°C.

An aqueous solution of the polymer was prepared by adding 50 g of polymer and 18 g of N,N-dimethylethanolamine to a 500 ml beaker containing 132 g of deionized water. The mixture was stirred and heated to 80°C for one hour at which time the polymer dissolved to afford a homogeneous solution. The pH of the solution was adjusted to 8.5 with a few additional drops of N,N-dimethylethanolamine and filtered through a 2.7 micron filter.

To a 300 ml stainless steel beaker, fitted with a mechanical stirrer, thermometer, and a three blade propeller stainless stirring rod was added 70.25 g of the polymer solution, 60.0 g of deionized water, 17.0 g of diethylene glycol, 1.5 g of ammonium hydroxide, and 25.5 g of Monolite Rubine 3B (a pigment from Avecia Corp.). The mixture was stirred for fifteen minutes to disperse the pigment, then 450.0 g of 300-400 micron glass beads and two drops of Surfynol 104E (a wetting agent from Air Products, Inc.) were added to the mixture. The mixture was stirred with cooling to maintain the temperature at 25-30°C until the desired particle size was obtained. The mixture was filtered through a 20 micron filter to remove the glass beads. The resulting ink jet ink composition contained 14.44% pigment, 12.74% polymer, and had a mean particle size of 0.43 microns.

### EXAMPLE 2

Following the procedure described in Example 1, a series of pigment grind bases were prepared using Polymer No. 1 and the following commercial pigments: Chromophtal Yellow 8 GN (a pigment having a particle size of 0.099 microns from Ciba Specialty Chemical Corp.), Irgalite Blue GLG (a pigment having a particle size of 0.073 microns from Ciba Specialty Chemical Corp.), Printex 300 (a carbon black pigment having a particle size of 0.042 microns from DeGussa Corp.), Hostaperm Pink E-WD (a pigment having a particle size of 0.081 microns from Clariant Corp.), Monarch 100 (a carbon black pigment having a particle size of 0.042 microns from Cabot Corp.), Monolite Yellow 2G WD (a pigment having a particle size of 0.073 microns from Avecia Corp.), Heliogen Blue D7160TD (a pigment having a particle size of 0.091 microns from BASF Corp.), and Chromophtal Blue A3R (a pigment having a particle size of 0.072 microns from Ciba Specialty Chemicals Corp.).

### EXAMPLE 3

For comparison purposes, an ink jet composition without polymer was prepared by mixing 16.15 parts of Cab-O-Jet 300 (a 15.5% solids, predispensed pigment, from Cabot Corporation), 10 parts of ethylene glycol, 10 parts of LIPONIC® EG-1 (a humectant from Lipo Chemicals, Inc.), 1 part ethanol, and 62.85 parts water. The pH of the ink was adjusted to 8.5 with ammonium hydroxide. The ink had a viscosity of 2.6 cP, and a surface tension of 71.6 dynes/cm. Filtration of the ink was accomplished using a membrane filter having a pore size of 0.45 µm.

The ink jet composition of this example was placed in a Hewlett Packard 51645A ink jet printer cartridge and was printed on uncoated paper (Nashua Dataprint Dual-Purpose Xerographic Bond, from Nashua Office Products) using a Hewlett Packard DESKJET® HP 855 Cse thermal ink jet printer. The ink dried within seconds upon impact on the paper and the resulting printed image possessed good print quality (optical density of 1.3 and good print acuity). No indication of poor jetting was observed.

Several minutes after drying, the printed image was evaluated for water fastness and accent marker resistance. Water fastness was tested in two ways. First, a 0.5 mL drop of water was allowed to run across a printed image held at a 45 degree angle. Some displacement of colorant was observed. Second, a 0.5 mL drop of water was placed on the printed image, allowed to stand for several seconds, and then was displaced by shearing with a finger. A significant amount of colorant was displaced. Accent marker resistance was tested by drawing over the printed image with a basic and an acidic accent market. Each type of marker removed a slight amount of colorant.

Printing reliability was tested by printing approximately 200-300 pages of text in succession. Storage ability was tested by printing the ink composition after storage in the jet printer cartridge at room temperature for one week. Reliability and stability of the ink composition was evaluated as good since an increase in the number of missing or misplaced dots was not observed.

### EXAMPLE 4

An ink jet composition was prepared by mixing 2.5 parts of Polymer No. 1, 16.15 parts (15.5% solids, prefissued pigment) of Cab-O-Jet 300 (Cabot Corporation), 10 parts ethylene glycol, 10 parts of LIPONIC® EG-1 (a humectant from Lipo Chemicals Inc.), 1.0 parts ethanol, and 61.35 parts water. The pH of the ink was adjusted to 8.5 with ammonium hydroxide. The ink had a viscosity of 3.4 cP, and a surface tension of 46.7 dynes/cm. Filtration of the ink was accomplished using a membrane filter having a pore size of 0.45 µm.

The ink jet composition of this example was placed in a Hewlett Packard 51645A ink jet printer cartridge and was printed on uncoated paper (Nashua Dataprint Dual-Purpose Xerographic Bond, Nashua Office Products) using a Hewlett Packard Deskjet® HP 855 Cse thermal ink jet printer. The ink dried within seconds upon impact on the paper and the resulting printed image possessed good print quality (optical density of 1.3 and good print acuity). No indication of poor jetting was observed.

Several minutes after drying, the printed image was evaluated for water fastness and accent marker resistance via the procedure outlined in Example 3. The printed image from the polymer-containing ink jet composition of this example was completely accent marker resistant and was superior in water fastness to the image tested in Example 3.

Printing reliability was tested through the procedure noted in Example 3. Reliability and stability of the ink composition was evaluated as good.

### EXAMPLE 5

An ink jet ink composition was prepared from 23.86 g of the Monolite Yellow 2 pigment-containing grind base of Example 2, 6.38 g of LIPONIC® EG-1 (a humectant from Lipo Chemicals, Inc.), 6.6 g of diethylene glycol, 0.6 g of Surfynol 104E (a wetting agent from Air Products Corp.), 1.0 g of 1-methyl-2 pyrolidinone, and 61.54 g of deionized water.. The resulting ink composition contained 3.5% pigment and 2.8% polymer. The pH of the ink was adjusted to 8.0 with ammonium hydroxide. Filtration of the ink was accomplished using a membrane filter having a pore size of 0.45 µ.

The ink jet ink composition of this example was placed in a Hewlett Packard 51645A ink jet printer cartridge and was printed on uncoated paper (Xerox 4200) using a Hewlett Packard Deskjet® HP 1600 thermal ink printer. The ink dried within seconds upon impact on the paper and the resulting printed image possessed good print quality (optical density of 0.91 and good print acuity). No indication of poor jetting was observed.

Several minutes after drying, the printed image was evaluated for water fastness and accent marker resistance via the procedure outlined in Example 3. The printed image from the ink jet composition of this example was completely accent marker resistant and was superior in water fastness to the image of Example 3.

Printing reliability was tested via the procedure outlined in Example 3. Reliability and storage stability were good.

### EXAMPLE 6

The ink jet ink composition of Example 5 was placed in an Epson 5020191 ink jet printer cartridge and was printed on uncoated Paper (Xerox 4200) using an Epson Stylus 740 piezo ink jet printer. The ink dried within seconds upon impact on the paper and the resulting printed image possessed good print quality (optical density of 1.0 and good print acuity). No indication of poor jetting was observed.

Several minutes after drying, the printed image as evaluated for water fastness and accent marker resistance via the procedure outlined in Example 3. The printed image from the ink jet composition of this example as completely accent marker resistant and was superior in water fastness to the image of Example 3.

Printing reliability was tested via the procedure outlined in Example 3. Reliability and storage stability were good.

### EXAMPLE 7

An ink jet ink composition was prepared from 19.0 g of the Chromophtal Blue A3R pigment-containing grind base of Example 2, 1.23 g of LIPONIC® EG-1 (a humectant from Lipo Chemicals, Inc.), 3.7 g of diethylene glycol, 1.25 g of Surfynol 104 E (a wetting agent from Air Products Corp.), 0.61 g of 1-methyl-2pyrolidinone, and 35.7 g of deionized water. The resulting ink composition contained 2.88% pigment and 3.5% polymer. The pH of the ink was adjusted to 8.0 with ammonium hydroxide. Filtration of the ink was accomplished using a membrane filter having a pore size of 0.45 µ.

The ink jet composition of this example was placed in a Hewlett Packard 51645A ink jet printer cartridge and was printed on uncoated paper (Xerox 4200) using a Hewlett Packard Deskjet® HP 1600 thermal ink jet printer. The ink dried within seconds upon impact on the paper and the resulting printed image possessed good print quality (optical density of 1.59 and good print acuity). No indication of poor jetting was observed.

Several minutes after drying, the printed image was evaluated for water fastness and accent marker resistance via the procedure outlined in Example 3. The printed image from the ink jet composition of this example was completely accent marker resistant and was superior in water fastness to the image of Example 3.

Printing reliability was tested via the procedure outlined in Example 3. Reliability and storage stability were good.

### EXAMPLE 8

The ink jet ink composition of Example 7 was placed in an Epson 5020191 ink jet printer cartridge and was printed on uncoated paper (Xerox 4200) using an Epson Stylus 740 piezo ink jet printer. The ink dried within seconds upon impact on the paper and the resulting printed image possessed good print quality (optical density of 1.59 and good print acuity). No indication of poor jetting was observed.

Several minutes after drying, the printed image was evaluated for water fastness and accent marker resistance via the procedure outlined in Example 3. The printed image from the ink jet composition of this example was completely accent marker resistant and was superior in water fastness to the image of Example 3.

Printing reliability was tested through via the procedure of outlined in Example 3. Reliability and storage stability were good.

### EXAMPLE 9

Using the procedure of Example 1, an ink jet ink of the present invention may be prepared by employing a weight ratio of feed monomers of 60:20:20 styrene:acrylic acid:butyl acrylate. Based on weight of monomers, the feed can contain 2% di-tert-butyl peroxide as an initiator. The reaction solvent can be ethyl 3-ethoxypropionate at 18% by weight of the total feed, while the feed rate is 8.0 g/min. Process temperature in the CSTR can be 158°C, while the process temperature in the solvent flash vessel (SFV) during the steady-state part of the run can range from 180 to 193°C. Pressure in the SFV can be atmospheric and the resin pump can discharge the resin continuously.

An aqueous solution of the resulting polymer can be prepared by adding 50 g of polymer and 18 g of N,N-dimethylethanolamine to a 500 ml beaker containing 130 g of deionized water. The mixture can be stirred and heated to dissolve the polymer, the pH adjusted to 8.5, and the resulting solution filtered through a 2.7 micron filter.

To a 300 ml stainless steel beaker, fitted with a mechanical stirrer, thermometer, and a three blade propeller stainless stirring rod can be added 70 g of the polymer solution, 60 g of deionized water, 17 g of diethylene glycol, 1.5 g of ammonium hydroxide, and 26 g of pigment. The mixture can be stirred to disperse the pigment, then 450.0 g of 300-400 micron glass beads and two drops of Surfynol 104E (a wetting agent from Air Products, Inc.) can be added to the mixture. The mixture can be stirred with cooling to maintain the temperature at 25-30°C until the desired particle size in the resulting ink jet ink composition is obtained, whereupon the composition is filtered to remove the glass beads.

### EXAMPLE 10

Using the procedure of Example 1, an ink jet ink of the present invention may be prepared by employing a weight ratio of feed monomers of 30:50:20 styrene:acrylic acid:butyl acrylate. Based on weight of monomers, the feed can contain 2% di-tert-butyl peroxide as an initiator. The reaction solvent can be ethyl 3-ethoxypropionate at 18% by weight of the total feed, while the feed rate is 8.0 g/min. Process temperature in the CSTR can be 158°C, while the process temperature in the solvent flash vessel (SFV) during the steady-state part of the run can range from 180 to 193°C. Pressure in the SFV can be atmospheric and the resin pump can discharge the resin continuously.

An aqueous solution of the resulting polymer can be prepared by adding 50 g of polymer and 18 g of N,N-dimethylethanolamine to a 500 ml beaker containing 130 g of deionized water. The mixture can be stirred and heated to dissolve the polymer, the pH adjusted to 8.5, and the resulting solution filtered through a 2.7 micron filter.

To a 300 ml stainless steel beaker, fitted with a mechanical stirrer, thermometer, and a three blade propeller stainless stirring rod can be added 70 g of the polymer solution, 60 g of deionized water, 17 g of diethylene glycol, 1.5 g of ammonium hydroxide, and 26 g of pigment. The mixture can be stirred to disperse the pigment, then 450.0 g of 300-400 micron glass beads and two drops of Surfynol 104E (a wetting agent from Air Products, Inc.) can be added to the mixture. The mixture can be stirred with cooling to maintain the temperature at 25-30°C until the desired particle size in the resulting ink jet ink composition is obtained, whereupon the composition is filtered to remove the glass beads.

### EXAMPLE 11

Using the procedure of Example 1, an ink jet ink of the present invention may be prepared by employing a weight ratio of feed monomers of 50:45:5 styrene:acrylic acid:butyl acrylate. Based on weight of monomers, the feed can contain 2% di-tert-butyl peroxide as an initiator. The reaction solvent can be ethyl 3-ethoxypropionate at 18% by weight of the total feed, while the feed rate is 8.0 g/min. Process temperature in the CSTR can be 158°C, while the process temperature in the solvent flash vessel (SFV) during the steady-state part of the run can range from 180 to 193°C. Pressure in the SFV can be atmospheric and the resin pump can discharge the resin continuously.

An aqueous solution of the resulting polymer can be prepared by adding 50 g of polymer and 18 g of N,N-dimethylethanolamine to a 500 ml beaker containing 130 g of deionized water. The mixture can be stirred and heated to dissolve the polymer, the pH adjusted to 8.5, and the resulting solution filtered through a 2.7 micron filter.

To a 300 ml stainless steel beaker, fitted with a mechanical stirrer, thermometer, and a three blade propeller stainless stirring rod can be added 70 g of the polymer solution, 60 g of deionized water, 17 g of diethylene glycol, 1.5 g of ammonium hydroxide, and 26 g of pigment. The mixture can be stirred to disperse the pigment, then 450.0 g of 300-400 micron glass beads and two drops of Surfynol 104E (a wetting agent from Air Products, Inc.) can be added to the mixture. The mixture can be stirred with cooling to maintain the temperature at 25-30°C until the desired particle size in the resulting ink jet ink composition is obtained, whereupon the composition is filtered to remove the glass beads.

Many modifications and variations of the present invention will be apparent to one of ordinary skill in the art in light of the above teachings. It is therefore understood that the scope of the invention is not to be limited by the foregoing description, but rather is to be defined by the claims appended hereto.

## Claims

1. An improved ink jet ink composition comprising:
(a) from about 60% to about 98% by total weight of a water-based carrier medium, wherein said medium comprises:
(1) up to about 30% by total weight of the medium of water-soluble organic component selected from the group consisting of alcohols, amides, carboxylic acids, esters, ethers, glycerine, glycols, glycol esters, glycol ethers, ketones, lactams, lactones, sulfones, organosulfoxides, and combinations thereof, and
(2) the balance of the medium being water;
(b) from about 1% to about 20% by total weight of at least one pigment; and
(c) wherein the improvement comprises the addition of from about 0.1% to about 20% by total weight of polymer produced by reacting in a polymerization reaction a mixture comprising:
(1) from about 30% to about 60% by weight of the mixture of styrene,
(2) from about 20% to about 50% by weight of the mixture of acrylic acid,
(3) from about 5% to about 20% by weight of the mixture of butyl acrylate, and
(4) a catalytic amount of at least one polymerization initiator.

2. The ink jet ink composition of claim 1 wherein the water-based carrier medium comprises about 70% to about 95% by total weight of the ink jet ink composition.

3. The ink jet ink composition of claim 1 or claim 2 wherein the pigment comprises about 2% to about 5% by total weight of the ink jet ink composition.

4. The ink jet ink composition of any of claims 1 to 3 wherein the polymer comprises about 1% to about 10% by total weight of the ink jet ink composition.

5. The ink jet ink composition of any of claims 1 to 3 wherein the polymer comprises about 2% to about 5% by total weight of the ink jet ink composition.

6. The ink jet ink composition of any of the preceding claims wherein the polymer is produced by reacting in a polymerization reaction a mixture comprising:
(1) from about 40% to about 55% by weight of the mixture of styrene,
(2) from about 30% to about 45% by weight of the mixture of acrylic acid,
(3) from about 8% to about 15% by weight of the mixture of butyl acrylate, and
(4) a catalytic amount of at least one polymerization initiator.

7. The ink jet ink composition of any of claims 1 to 5 wherein the polymer is produced by reacting in a polymerization reaction a mixture comprising:
(1) from about 49% to about 51% by weight of the mixture of styrene,
(2) from about 39% to about 41% by weight of the mixture of acrylic acid,
(3) from about 9% to about 11% by weight of the mixture of butyl acrylate, and
(4) a catalytic amount of at least one polymerization initiator.

8. The ink jet ink composition of any of the preceding claims wherein the polymer has an acid number in the range of about 200 to about 300.

9. The ink jet ink composition of any of the preceding claims wherein the polymer has a weight average molecular weight in the range of about 3,000 to about 20,000.

10. The ink jet ink composition of any of the preceding claims wherein the polymer has a softening point in the range of about 100°C to about 150°C.

11. The ink jet ink composition of any of the preceding claims wherein the polymer has a glass transition temperature of less than about 150°C.

12. The ink jet ink composition of any of the preceding claims wherein the ink jet ink composition has an alkaline pH.

13. The ink jet ink composition of any of the preceding claims wherein the pH is within the range of about 7 to about 10.

14. The ink jet ink composition of any of the preceding claims wherein the ink jet ink composition has a surface tension from about 20 to about 70 dynes/cm

15. The ink jet ink composition of any of the preceding claims wherein the ink jet ink composition has a viscosity below about 15 cP at 25°C.

16. The ink jet composition of any of the preceding claims wherein the polymerization initiator comprises from about 0.5% to about 5.0% by total weight of the mixture and is a member selected from the group consisting of thermal initiators, redox initiators, and combinations thereof.
